# EUROPEAN PATENT APPLICATION

(11) **EP 3 929 430 A1**
(43) Date of publication of application: **29.12.2021**
(21) Application number: 20182742.5
(22) Date of filing: 26.06.2020
(51) Int. Cl.: F03B 3/14

(54) **RUNNER FOR A HYDRAULIC TURBINE**

(71) Applicant: Poseidon Hydropower P.C., 11523 Athens (GR)
(72) Inventor: Sanoudos Dramaliotis, Vasileios, 15344 Gerakas (GR); Anagnostopoulos, Ioannis, 15561 Cholargos (GR)
(74) Representative: Vertellis, Socrates

(57) **Abstract**

A runner for a reaction type hydraulic turbine, comprising a rotating hub around an axis Y extending longitudinally across the fluid inlet portion and the fluid outlet portion, a plurality of runner blades, attached to the periphery of the hub, each blade of the plurality of runner blades being arranged to rotate around axis Y, and self-rotate relative to an axis L. Each blade is connected to or comprises at least one resilient element, wherein the resilient element is configured to deform resiliently to self-adjust each of the plurality of the runner blades when different hydrodynamic forces and moments are developed on each of the plurality of the runner blades when the runner operates under different flow rate conditions.

## Description

### FIELD

The present disclosure relates to the field of hydraulic turbine power generation, and in particular to a runner for a hydraulic turbine.

### BACKGROUND

Reaction hydraulic turbines are commonly used with a power generator to obtain electric power from a stream of water, which commonly has a variable flow rate and, as a result, velocity. Targeting to obtain the maximum possible efficiency in energy conversion, during all operating conditions, it is generally required to appropriately regulate the operating parameters of the hydraulic turbine, meaning the respective positions of the guide vanes and, in certain turbine types, the runner blades. In particular, when applicable, the positioning of the runner blades must be accurately adjusted for each given position of the stationary blades of the discharge transformation unit, while taking into account the operating conditions of the hydraulic turbine. Such a regulation is performed on conventional turbines through an external actuator with appropriate regulation mechanism that allows external actuation upon the constantly rotating runner.

There is a number of types of conventional hydraulic turbines that are utilized for hydroelectric power generation. Two examples of conventional reaction type hydraulic turbines that can adjust the runner (or rotor) blades positioning according to the present disclosure and are well known to one skilled in the art, are the Deriaz and Kaplan type turbines. However, the runner according to the present disclosure may also be applied to other hydraulic turbines of the reaction type.

Such a conventional regulating mechanism is described in the document US 3,146,990 (R. S. Sproule) and in the document US 2015/0219064

### SUMMARY

According to aspects of the present disclosure, a runner for a hydraulic turbine is provided, comprising a fluid inlet portion, a fluid outlet portion, a hub, rotatable around an axis Y extending longitudinally across the fluid inlet portion and the fluid outlet portion , a plurality of runner blades, each being connected to a regulating shaft and configured to self-rotate around an axis L, the plurality of runner blades being attached to the periphery of the hub, each blade of the plurality of runner blades being arranged to rotate around axis Y along with the hub, the hub comprising at least one hollow portion and at least one resilient element, wherein the at least one resilient element is configured to deform, such that to adjust each of the plurality of the runner blades when hydrodynamic forces act on each of the plurality of the runner blades.

According to aspects of the present disclosure, at least one resilient element is located within the hollow portion of the hub (230).

According to aspects of the present disclosure the at least one resilient element is part of each of the plurality of the runner blades

According to aspects of the present disclosure, the at least one resilient element comprises a compression spring.

According to aspects of the present disclosure, a first end of the at least one compression spring (400) is directly coupled to each runner blade (240) and a second end of the at least one compression spring is directly coupled to the hub (230).

According to aspects of the present disclosure the at least one resilient element comprises a plurality of resilient elements.

According to aspects of the present disclosure, the number of the plurality of the resilient elements is equal to the number of the plurality of the runner blades.

According to aspects of the present disclosure, each of the plurality of the resilient elements is coupled to a corresponding runner blade of the plurality of runner blades.

According to aspects of the present disclosure, each resilient element of the plurality of resilient elements is a torsional spring.

According to aspects of the present disclosure each runner blade of the plurality of runner blades comprises a leading edge towards the fluid inlet portion, a trailing edge towards the fluid outlet portion, and a hub edge , the trailing edge being spaced apart from the leading edge and an attachment point from which each runner blade is connected to the hub wherein the attachment point of each blade of the plurality of runner blades is displaced to the leading edge. towards the fluid inlet portion relative to the midspan of the hub edge of each runner blade.

According to aspects of the present disclosure, each blade from the plurality of runner blades is made from a resilient material with isotropic or anisotropic elastic properties.

According to aspects of the present disclosure, runner blade pitch angle (a°) of each blade of the plurality of runner blades is self-adapted, when the at least one resilient element or the plurality of resilient elements are resiliently deformed.

According to aspects of the present disclosure, each of the resilient elements is connected to a pretension device.

According to aspects of the present disclosure, wherein each of the runner blades is connected in parallel to the at least one resilient element to at least one vibration damping element. In the manner described and according to aspects illustrated herein, the runner may be used in a hydraulic turbine to adjust the runner blades while addressing one or more needs such as increasing the efficiency of the hydraulic machine independently of its size while simplifying manufacturing process of the hydraulic machine since no additional mechanical means are required for the adjustment of the blades, thus resulting also in lower manufacturing costs.

### BRIEF DESCRIPTION OF THE DRAWINGS

Aspects of an embodiment will be described in reference to the drawings, where like numerals reflect like elements:
Figure 1 is a section of a runner according to a first embodiment of the inventive concept
Figure 2 is a cross section of a runner according to a second embodiment of the inventive concept
Figure 3 is another cross section of a runner with a plurality of resilient elements according to the inventive concept
Figure 4 is a top view of a hydraulic turbine comprising the runner according to the disclosure
Figure 5 is a perspective view of an individual runner blade with a resilient element according to the inventive concept
Figure 6 is a sketch describing the operating principle of the inventive concept

### REFERENCE NUMERALS

- 200: runner
- 210: fluid inlet portion
- 220: fluid outlet portion
- 230: Runner hub
- 231: Blade Retention Device
- 240: Runner blades
- 245: attachment point
- 250: leading edge
- 260: trailing edge
- 270: hub edge
- 280: regulating shaft
- 290: shroud edge
- 300: Distributor
- 320: Guide Vanes
- 400: Compression spring
- 500: Torsional springs
- 530: Spring Pretension device
- 531: Pretention Device Regulating Bolt
- 600: Runner Main Shaft
- 700: Vibration Damping Element (Damper)
- 800: Stay Vanes
- 1000: hydraulic turbine

- Mₕ: Runner blade hydrodynamic Torque
- Mᵣₑₛ: Resilient element Counter Balancing Torque
- a: Runner Blade Pitch angle
- b: Guide Vanes Pitch angle

### DETAILED DESCRIPTION

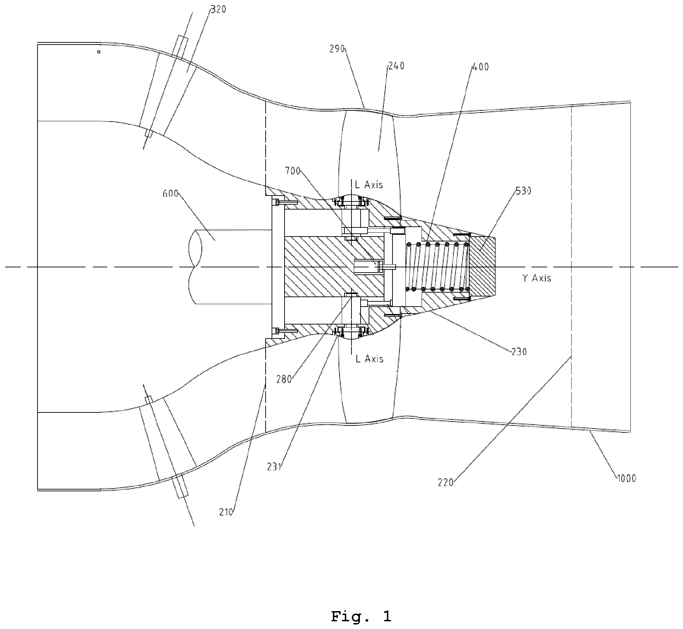

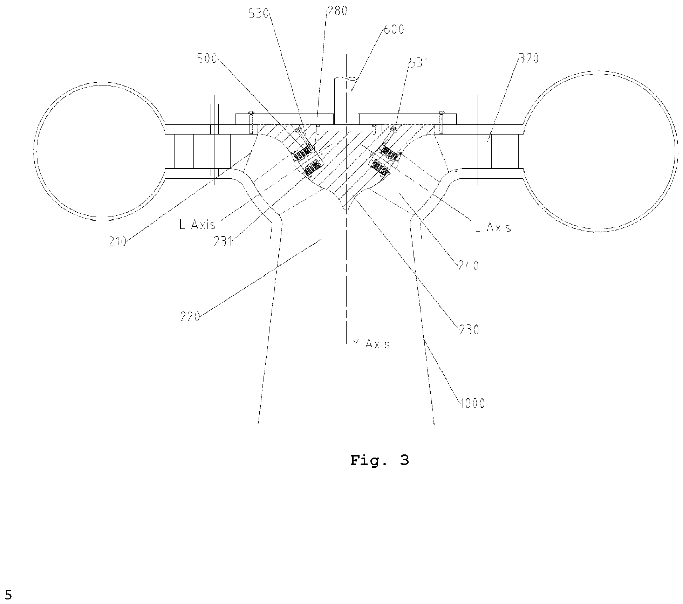

An embodiment of the runner for a hydraulic machine according to aspects of the disclosure will now be described with reference to Figures 1 to 6, wherein like numerals represent like parts, and will generally be referred to by the reference numeral 200. Although the runner 200 is described with reference to specific examples, it should be understood that modifications and changes may be made to these examples without going beyond the general scope as defined by the claims. In particular, individual characteristics of the various embodiments shown and/or mentioned herein may be combined in additional embodiments. Consequently, the description and the drawings should be considered in a sense that is illustrative rather than restrictive. The Figures, which are not necessarily to scale, depict illustrative aspects and are not intended to limit the scope of the disclosure. The illustrative aspects depicted are intended only as exemplary.

The term "exemplary" is used in the sense of "example," rather than "ideal." While aspects of the disclosure are amenable to various modifications and alternative forms, specifics thereof have been shown by way of example in the drawings and will be described in detail. It should be understood, however, that the intention is not to limit aspects of the disclosure to the particular embodiment(s) described. On the contrary, the intention of this disclosure is to cover all modifications, equivalents, and alternatives falling within the scope of the disclosure.

Various materials, methods of construction and methods of fastening will be discussed in the context of the disclosed embodiment(s). Those skilled in the art will recognize known substitutes for the materials, construction methods, and fastening methods, all of which are contemplated as compatible with the disclosed embodiment(s) and are intended to be encompassed by the appended claims.

As used in this disclosure and the appended claims, the singular forms "a," "an," and "the" include plural referents unless the content clearly dictates otherwise. As used in this disclosure and the appended claims, the term "or" is generally employed in its sense including "and/or" unless the content clearly dictates otherwise.

Throughout the description, including the claims, the terms "comprising a," "including a," and "having a" should be understood as being synonymous with "comprising one or more," "including one or more," and "having one or more" unless otherwise stated. In addition, any range set forth in the description, including the claims should be understood as including its end value(s) unless otherwise stated. Specific values for described elements should be understood to be within accepted manufacturing or industry tolerances known to one of skill in the art, and any use of the terms "substantially," "approximately," and "generally" should be understood to mean falling within such accepted tolerances.

When an element or feature is referred to herein as being "on," "engaged to," "connected to," or "coupled to" another element or feature, it may be directly on, engaged, connected, or coupled to the other element or feature, or intervening elements or features may be present. In contrast, when an element or feature is referred to as being "directly on," "directly engaged to," "directly connected to," or "directly coupled to" another element or feature, there may be no intervening elements or features present. Other words used to describe the relationship between elements or features should be interpreted in a like fashion (e.g., "between" versus "directly between," "adjacent" versus "directly adjacent," etc.).

Spatially relative terms, such as "top," "bottom," "middle," "inner," "outer," "beneath," "below," "lower," "above," "upper," and the like, may be used herein for ease of description to describe one element or feature's relationship to another element(s) or feature(s) as illustrated in the drawings. Spatially relative terms may be intended to encompass different orientations of a device in use or operation in addition to the orientation depicted in the drawings. For example, if the device in the drawings is turned over, elements described as "below" or "beneath" other elements or features would then be oriented "above" the other elements or features. Thus, the example term "below" can encompass both an orientation of above and below. The device may be otherwise oriented (rotated 90 degrees or at other orientations) and the spatially relative descriptors used herein interpreted accordingly.

Although the terms "first," "second," etc. may be used herein to describe various elements, components, regions, layers, sections, and/or parameters, these elements, components, regions, layers, sections, and/or parameters should not be limited by these terms. These terms are only used to distinguish one element, component, region, layer, or section from another region, layer, or section. Thus, a first element, component, region, layer, or section discussed herein could be termed a second element, component, region, layer, or section without departing from the teachings of the present inventive subject matter.

As shown in Figure 1, the runner 200 may include minimal components to simplify manufacturing, a plurality of runner blades, a hub 230 including a hollow portion and at least one resilient element 400 located within the hollow portion of the hub 230 of the runner 200.

Conventional reaction hydraulic turbines of Kaplan or Deriaz type, teach a regulation mechanism for the runner blades of the runner that is based on external position input of the runner blades. Positioning of the runner blades is achieved through a complicated mechanical system that mainly comprises mechanical means, such as regulating shafts (regular and hollow), push rods, hydraulic systems, all requiring external automated actuators. Although these regulating mechanisms allow the adjustment of each of the plurality of runner blades and therefore the efficient operation of the turbine under variable discharge and pressure conditions, they have the disadvantage of complex manufacturing and significant cost due to the increased number of the various components that need to be assembled. In addition, the control of the system is challenging since various components have to be aligned and synchronized in order to succeed the proper adjustment of the runner blades, making thus the reliability of the system vulnerable. Moreover, the complexity of the described conventional regulating mechanisms results in difficult and long duration maintenance that may require the hydraulic turbine to stop operating for a significant amount of time.

It is thus an object of the present disclosure to overcome these drawbacks.

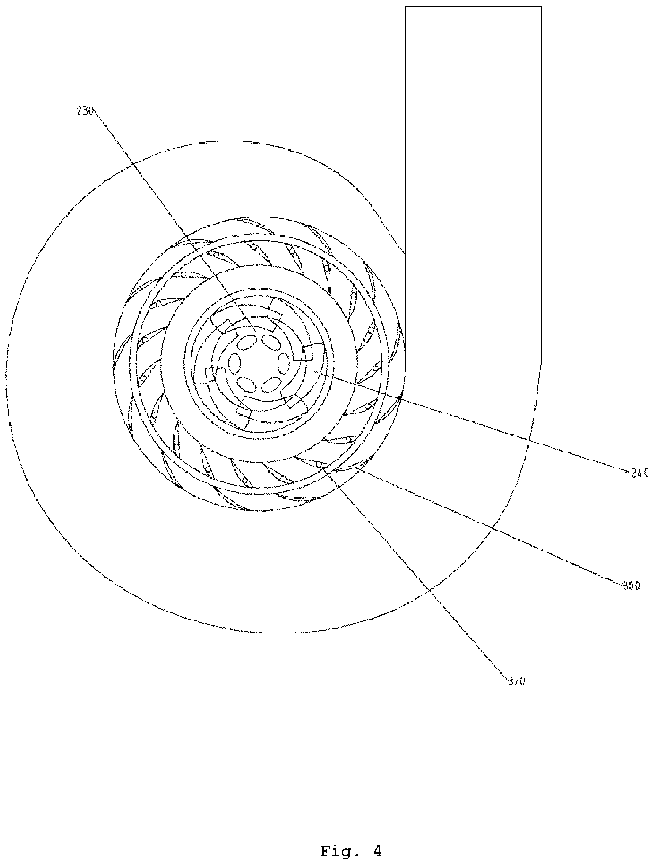

In the disclosed embodiment of figure 1, a hydraulic turbine 1000 is provided, comprising a distributor 300 with regulating guide vanes 320, and a runner 200. The runner is adapted to rotate under the hydrodynamic forces caused by fluid flow passing through it. The distributor 300 may comprise a casing having a plurality of regulating (nonrotating around Y axis) blades 320, distributed around the casing, having an adjustable pitch for adapting the flow rate of a fluid passing through the runner 200 of the hydraulic turbine 1000. The fluid may preferably be water. The regulating blades 320 are commonly known in the art also as guide vanes. During operation of the hydraulic turbine 1000, the guide vanes 320 are simultaneously swiveled by regulating means (not shown), such as regulating ring, that is linked to, for example, a control lever of each stationary blade 320. Stay vanes 800 and guide vanes 320, as shown in fig.4 guide the water to the runner blades 240. Stay vanes 800 remain stationary at their position and reduce the swirling of water due to radial flow, as it enters the guide vanes 320, and then the runner blades 240, thus making turbine more efficient. An actuator, preferably a servomotor allows the manipulation of the regulating means, being thus configured to control the flow (either increase or decrease) of the water circulating around the runner 200, by opening or closing the guide vanes 320, thus changing the direction that the water strikes each runner blade 240. Each runner blade 240 may be secured to the runner via a blade retention device 231. The distributor 300 is configured to convert part of the water's dynamic energy to kinetic energy. As the direction that the water strikes the runner changes, so does the discharge pass through the turbine. The discharge of the turbine 1000, the shaft torque of the runner main shaft 600 and the overall power of the reaction turbine 1000 are thus regulated through the rotation of the guide vanes 320.

The runner 200 is connected to the power transmission shaft downstream of the distributor 300. The runner 200 comprises a fluid inlet portion 210 and a fluid outlet portion 220, a hub 230 and a plurality of runner blades 240 (or runner blades) rotating around an axis Y extending longitudinally across the fluid inlet portion and the fluid outlet portion. Each runner blade 240 comprises an attachment point 245 with a shaft formation on the part in the vicinity of the hub, around which the blade self-rotates around an axis L in order to adjust its position (pitch) according to the operating conditions and the angle of the guide vanes 320. On the contrary, the attachment point 245 in conventional turbines is in the vicinity of the midspan of the runner blade 240, in order to minimize the regulation force required for the rotation (pitch regulation) of the runner blade 240. Each blade from the plurality of runner blades may be made from a resilient material with isotropic or anisotropic elastic properties. In other examples, each blade from the plurality of runner blades may be made from a metallic or composite material.

Each of the plurality of runner blades 240 comprises a leading edge - the upstream edge of the blade where the water stream first comes in contact with the blade, a trailing edge - the downstream edge of the blade where the water leaves the blade, the hub edge 270 - the edge in contact with the hub, and the shroud edge 290- the edge which is close enough with the shroud to minimize tip flow losses. Each of the blades comprises an attachment point 245 on the hub edge 270, connected to a regulation shaft on the hub. Each of the plurality of the runner blades 240 of the runner 200 is designed to rotate relative to the axis Y along with the hub structure and self-rotate relative to an axis L, preferably on the meridional surface of the turbine 1000. The self-rotation is assisted through a regulating shaft 280 attached to each blade. The attachment point 245 is selected in such way that when the opening of the guide vanes 320 increases, the hydrodynamic forces create an increasing torque on the blade lead around the axis L, such as to increase the opening of the runner blades 240. Further, the attachment point 245 is located towards the leading edge of each runner blade 240 leading to a proportional increase of torque on the blade as guide vane opening increases. The torque developed on the runner blades regulating shaft 280 leads to their further opening, increasing the turbines discharge. As guide vane opening decreases (GV closing) the torque developed on each runner blade 240 decreases. A person skilled in the art would understand that the attachment point 245 location changes depending on the turbine nominal flow characteristics, such as operating head and discharge, as also on the turbine type (Kaplan, Deriaz, diagonal etc.). The disclosed embodiment of figure 1 comprises a Kaplan type turbine with four runner blades. Different type of turbine such as Kaplan, Deriaz or diagonal and different number of runner blades 240 is contemplated, for example two, four, five, six, without deviating from the scope of the disclosure. The rotation of the runner blades 240 of the runner 200 results in the transformation of the kinetic energy of the fluid to electric energy.

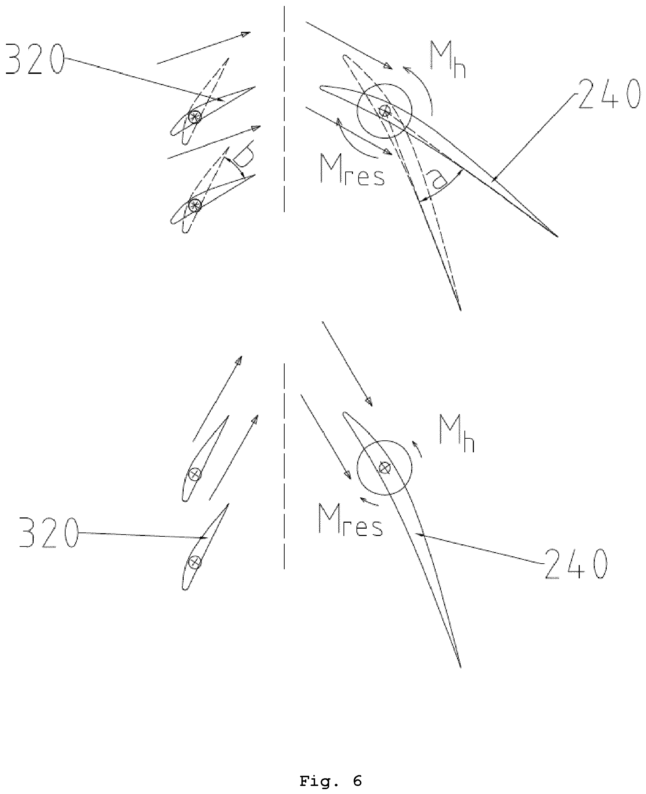

Figure 1 shows the runner 200 (in a cross section) further comprising a hollow section comprising at least one resilient element (400), which is connected, either directly or with suitable connecting means, such as pins or levers or bushes, with each of the plurality of the runner blades 240 of the runner 200. In other examples, the resilient element is part of each of the plurality of runner blades. The resilient element 400 is acting on each of the plurality of the runner blades 240 and is configured to deform in order to appropriately self-adjust each of the plurality of the runner blades 240 under the torque developed on the regulating shaft 280 resulting from hydrodynamic forces acting on them. In detail and as shown in fig.6 wherein the operating principle is indicatively shown, as the opening of guide vanes increases, the hydrodynamic forces acting upon the runner blade produce increased torque (Mh) on the attachment point 245 of the blade and as a result the regulating shaft 280. This increased torque (Mh) leads to rotation (pitching) of the runner blade 240 around its regulation shaft. As the runner blade pitches towards greater opening, the resilient element is directly or indirectly deformed in a linear or non-linear way, resulting in increased opposing torque (Mres) on the regulating shaft 280, counterbalancing the hydrodynamic force torque. Consequently, the runner blades pitch towards a certain position where the two moments balance each other. Through appropriate design of the runner blade (hydraulic shape and attachment point allocation), along with the characteristics of the resilient element 400, the runner blades 240 assumes an appropriate pitch rotation for each pitch position in the opening range of the guide vanes 320 offering high efficiency rate for every discharge.

Respectively as the guide vanes opening decreases the resulting hydrodynamic force torque on the runner blade regulation shaft decreases, leading to lower deformations of the resilient element 400 thus balancing the runner blades on lower opening pitch, again assuming appropriate pitch for high efficiency.

As a result, the runner blades 240 assume appropriate pitch rotation (a) in order to ensure a highly efficient operation under all discharge rates.

The at least one resilient element 400 is preferably a compression spring. A compression spring 400 is preferred since it offers a simple, compact design with long life span even under harsh conditions and is easily adjusted due to its compact size. In addition, the compression spring has the ability to resist the movement of the runner blades 240 when hydrodynamic forces are acting on them, while returning the runner blades 240 to its desired position. Further, compression spring provide a more economical solution, thus contributing to a less costly system

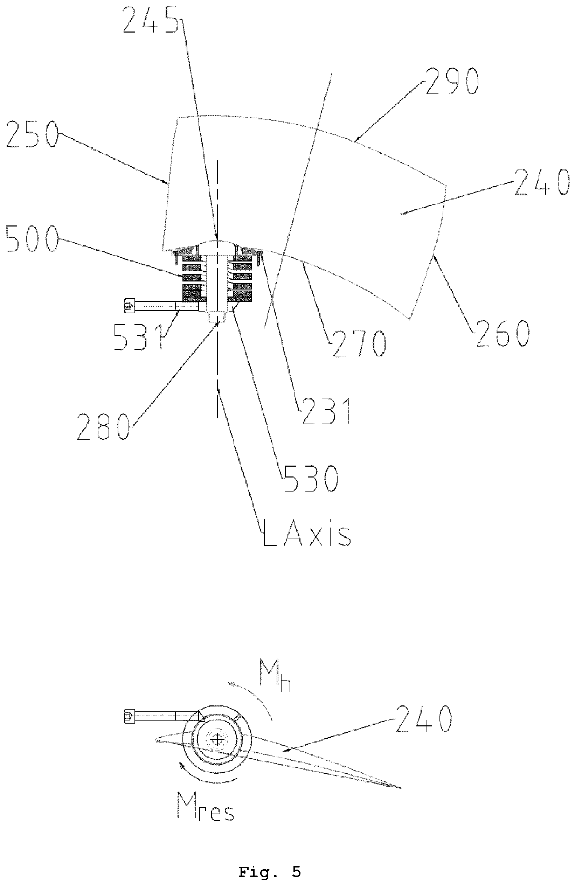

In order to ensure the stability of the self-regulation mechanism under all operational conditions the runner blades 240 are designed to operate under torque balance between hydrodynamic torque (Mh) and the counter balancing torque (Mres) of the resilient element even at minimum discharge rate. This is achieved through a pretension mechanism 530 on the resilient element 400 that ensures that the resilient element 400 is deformed on all circumstances. Depending on the resilient element, the pretension mechanism's 530 design may vary. Further, the pretention mechanism 530 ensures the reliable adjustment of the runner blades self-regulation mechanism. The proper control of the pretension mechanism may be achieved through regulation bolts 531 that the pretension mechanism comprises, as shown in figure 5.

In another embodiment, beyond the resilient element, and in order to ensure stable dynamic behavior, damper elements 700 can be introduced on the design in parallel with the resilient elements. These elements minimize oscillation and vibration phenomena during self-adjustment of the runner blades 240 under different operation conditions.

The combined operation of these elements leads to reliable and stable self-adjustment of the runner blades 240 as guide vanes opening changes, regulating the turbine's discharge rate.

When guide vanes 320 of the turbine 1000 are completely closed, no flow passes through the turbine 1000, hence, no hydrodynamic torque is developed on the blade regulation shaft. In this state the runner blades 240 remain in the closed limit position due to the resilient element pretention. As Guide vanes opening increases, meaning that the pitch (b) of the guide vanes 320 increases, the hydrodynamic torque on the regulating shaft 280 of each of the runner blades 240 increases and the compression spring 400 is compressed in order to adjust each of the runner blades 240 into a new position where torques are balanced. Further opening of the guide vanes 320 results to further compression of the spring and further adaptation of each of the runner blades 240. Therefore, when flow discharge (and consequently power) through the turbine 1000 needs to be increased, the guide vanes opening pitch (b) is increased through an appropriate actuator. As already disclosed, each blade of the plurality runner blades 240 is self-adjusted to adapt to different flow conditions, so that the hydraulic turbine 1000 operates in the best possible efficiency without the need for external actuator, which is required in conventional turbines. Respectively, when the flow discharge needs to be decreased, the guide vanes opening pitch (b) decreases and each of the plurality of the runner blades 240 self-adjusts accordingly.

Each runner blade 240 of the plurality of runner blades comprises a leading edge 250 towards the fluid inlet portion and a trailing edge 260 towards the fluid outlet portion, the trailing edge 260 being spaced apart from the leading edge 250, wherein the attachment point 245 of each of the plurality of runner blades 240 is in the displaced to the leading edge 250 towards the fluid inlet portion 210 relative to the midspan of the hub edge of each runner blade. With the term "displaced to the leading edge" it is meant that the attachment point 245 of each runner blade of the plurality of runner blades 240 is substantially closer to the end of the leading edge 250 of the runner 200 towards the fluid inlet portion 210. Having the attachment point 245 in such location leads to a smooth, proportional increase of hydrodynamic torque on it as Guide vane opening increases, (hence as discharge rate increases). Since the regulation shaft connected on the attachment point 245 of the runner blades is coupled to a resilient element that counterbalances the hydrodynamic torque, such a proportional torque increase fits the general characteristics of resilient elements allowing the runner blade self-adjustment.

Each blade of the plurality of the runner blades 240 has a blade angle (a°) defined by the angle between a line connecting the adjustment point on the hub edge to the trailing edge point on the hub edge and axis Y. This angle can be adjusted in a certain range depending on flow characteristics and turbine type. It is foreseen that within that range, the runner blades 240 will provide the optimum efficiency for the hydraulic turbine, by self-adjusting to the different operating conditions. During operation and under variable discharge and pressure conditions, the compression spring 400 is resiliently deformed due to hydrodynamic forces, and because of its deformation, the blade angle (a°) of each runner blade is self-adapted. Runner blade angle (a°) is also referred to as runner blade pitch (a).

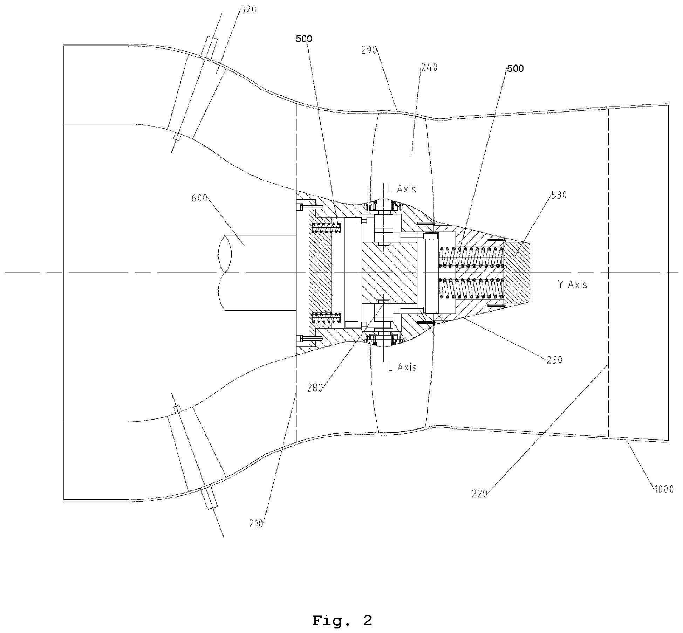

In other embodiments, as shown in figures 2-3, the at least one resilient element comprises a plurality of resilient elements 500.

In examples of this configuration, the number of the plurality of resilient elements 500 is equal to the number of the plurality of the runner blades 240. Each one of the plurality of the resilient elements 500 is coupled to a corresponding runner blade from the plurality of runner blades 240 to obtain a linear or a non-linear behaviour, as it can be seen in Figs. 2-3. This configuration provides the advantage of simple and reliable design, with precise self-adapting operation for each runner blade.

Each resilient element 500 is preferably a torsional spring. A torsional spring 500 is preferred since the life span is long even under harsh conditions and is easily adjusted due to its compact size. Further and according to this embodiment, each torsional spring has a variable spring constant that, for example, is changing during the deformation of each of the runner blades 240. Each torsional spring 500 with the variable spring characteristics allow efficient runner blade self-adaptation under all flow conditions. Each torsional spring 500 is connected to a spring pretension device 530.

The disclosed runner 200 ensures high efficiency rates under variable conditions, since it provides the possibility of self-adjusting the runner blades 240 through at least one resilient element or through a plurality of resilient elements, thus being a simple construction that can be manufactured with reasonable cost, being thus suitable for all sizes and applications of hydraulic turbines, i.e. from smaller scale power generators to large reaction turbines.

It should be noted that the above embodiments are only for illustrating and not limiting the technical solutions of the present invention. Although the present invention has been described in detail with reference to the above embodiments, those skilled in the art should understand that any modifications or equivalent substitutions of the present invention are intended to be included within the scope of the appended claims.

Although the present disclosure herein has been described with reference to particular embodiments, it is to be understood that these embodiments are merely illustrative of the principles and applications of the present disclosure.

It is intended that the specification and examples be considered as exemplary only, with a true scope of the disclosure being indicated by the following claims.

## Claims

1. A runner (200) for a reaction type hydraulic turbine (1000), comprising:
a fluid inlet portion (210) and a fluid outlet portion (220),
a hub (230), rotatable around an axis Y extending longitudinally across the fluid inlet portion (210) and the fluid outlet portion (220),
a plurality of runner blades (240), each being connected to a regulating shaft (280) and configured to self-rotate around an axis L, said plurality of rotor blades being attached to the periphery of the hub (230), each blade of the plurality of runner blades (240) being arranged to rotate around axis Y along with the hub (230),
**characterised in that** the hub (230) comprises at least one hollow portion and at least one resilient element (400), the at least one resilient element (400) being configured to deform, such that to adjust each of the plurality of the runner blades (240), when hydrodynamic forces are acting on each of the plurality of runner blades (240).

2. The runner according to claim 1, wherein the at least one resilient element (400), is located within the hollow portion of the hub (230).

3. The runner according to claim 1 wherein the at least one resilient element (400) is part of each of the plurality of the runner blades (240)

4. The runner (200) according to claim 1, wherein the at least one resilient element (400) comprises a compression spring.

5. The runner (200) according to claim 4, wherein a first end of the at least one compression spring (400) is directly coupled to each runner blade (240) and a second end of the at least one torsional spring is directly coupled to the hub (230).

6. The runner (200) according to claim 1, wherein the at least one resilient element (400) comprises a plurality of resilient elements (500).

7. The runner (200) according to claim 6, wherein the number of the plurality of resilient elements (500) is equal to the number of the plurality of runner blades (240).

8. The runner (200) according to claims 6-7, wherein each of the plurality of the resilient elements (500) is coupled to a corresponding runner blade from the plurality of the runner blades (240).

9. The runner (200) according to claims 6-8, wherein each resilient element of the plurality of resilient elements is a torsional spring (500).

10. The runner (200) according to any of claims 1-9, wherein each runner blade (240) of the plurality of runner blades comprises a leading edge (250) towards the fluid inlet portion 210, a trailing edge (260) towards the fluid outlet portion 220, and a hub edge (270), the trailing edge 260 being spaced apart from the leading edge (250) and an attachment point 245 from which each runner blade (240) is connected to the hub (230) , wherein the attachment point 245 of each blade of the plurality of runner blades (240) is displaced to the leading edge (250).

11. The runner (200) according to any of the preceding claims wherein each blade from the plurality of runner blades 240 is made from a resilient material with isotropic or anisotropic elastic properties.

12. The runner 200 according to claims 1-11 wherein the runner blade pitch angle (a°) of each blade of the plurality of runner blades (240) is self-adapted, when the at least one resilient element or the plurality of resilient elements (500) are resiliently deformed.

13. The runner (200) according to claims 6-12, wherein each of the resilient elements (500) is connected to a pretension device (530) .

14. The runner (200) according to claims 1-5, wherein each of the runner blades (240) is connected in parallel to the at least one resilient element (400) with at least one vibration damping element (700).
